# EUROPEAN PATENT SPECIFICATION

(11) **EP 4 449 672 B1**
(45) Date of publication and mention of the grant of the patent: **06.05.2026**
(21) Application number: 22840311.9
(22) Date of filing: 14.12.2022
(51) Int. Cl.: H04L 9/40, G06F 21/33, H04L 9/32, G06F 21/44

(54) **DEFENDING WEB BROWSERS AGAINST MAN-IN-THE-MIDDLE ATTACKS**
VERTEIDIGUNG VON WEB-BROWSERN GEGEN MAN-IN-THE-MIDDLE-ANGRIFFE
DÉFENSE DE NAVIGATEURS WEB CONTRE LES ATTAQUES PAR INTERCEPTION

(30) Priority: 14.12.2021 US 202163289168 P
(43) Date of publication of application: 23.10.2024
(73) Proprietor: Island Technology, Inc., Dallas, Texas 75019 (US)
(72) Inventor: LEIBOVICH, Roi, TEL AVIV (IL); LESHENKO, Nikita, TEL AVIV (IL); DALAL, Ron, TEL AVIV (IL); AMIGA, Dan, 4722359 RAMAT HASHARON (IL)
(74) Representative: Marks & Clerk LLP
(86) International application number: PCT/IB2022/062212
(87) International publication number: WO 2023/111893

(56) References cited:
- ZHANG YIMING ZHANGYIM17@MAILS TSINGHUA EDU CN ET AL: "Rusted Anchors: A National Client-Side View of Hidden Root CAs in the Web PKI Ecosystem", PROCEEDINGS OF THE 32ND CONFERENCE ON L'INTERACTION HOMME-MACHINE, ACMPUB27, NEW YORK, NY, USA, 12 November 2021 (2021-11-12), pages 1373 - 1387, XP058942345, ISBN: 978-1-4503-8607-4, DOI: 10.1145/3460120.3484768

## Description

### BACKGROUND

Computer network communications are often secured through the use of encryption and decryption keys and certificates issued by certificate authorities, such as those used by the Hypertext Transfer Protocol Secure (HTTPS) which employs the Transport Layer Security (TLS) or the Secure Sockets Layer (SSL) protocols. In accordance with such protocols, a certificate that is provided by a computer server to a web browser is validated by the web browser by tracing the certificate to a root certificate authority, typically along a chain of intermediate certificate authorities, and authenticating digital signatures provided by each certificate authority along the chain. Web browsers are supported in this task by consulting lists of "trusted" root certificate authorities that are maintained by the web browser, the operating system of the computer that hosts the web browser, or both. Unfortunately, existing systems are vulnerable to malicious actors that manipulate such lists, such as in support of man-in-the-middle attacks.

Zhang Yiming et al: "Rusted Anchors: A National Client-Side View of Hidden Root CAs in the Web PKI Ecosystem", PROCEEDINGS OF THE 32ND CONFERENCE ON L'INTERACTION HOMME-MACHINE, New York, November 2021, pages 1373-1387, XP058942345, discloses a client-side view of hidden root certificate authorities in the Web PKI ecosystem.

### SUMMARY

In an aspect of the invention a computer network security method is provided, including configuring a web browser with a capability of determining whether a root certificate authority appears in a first list of trusted root certificate authorities that is maintained by an operating system of a host computer that hosts the web browser, configuring the web browser with a capability of determining whether the root certificate authority was included in the first list at the time that the operating system was installed on the host computer or was thereafter included in the first list by the operating system, configuring the web browser with a capability of determining whether the root certificate authority appears in a second list of trusted root certificate authorities that is provided to the web browser by an administrator, configuring the web browser to determine whether a certificate meets predefined invalidation criteria; and configuring the web browser to cease to communicate with a party that provided the certificate to the web browser responsive to the web browser determining that the certificate meets the predefined invalidation criteria.

In some examples, the computer network security method further includes configuring the web browser to validate the certificate and thereafter determine whether the certificate meets the predefined invalidation criteria.

The predefined invalidation criteria includes following criteria: the certificate's root certificate authority was not included in the first list at the time that the operating system was installed on the host computer, or was not included in the first list by the operating system after the operating system was installed on the host computer.

### BRIEF DESCRIPTION OF THE DRAWINGS

Aspects of the invention will be understood and appreciated more fully from the following detailed description taken in conjunction with the appended drawings in which:

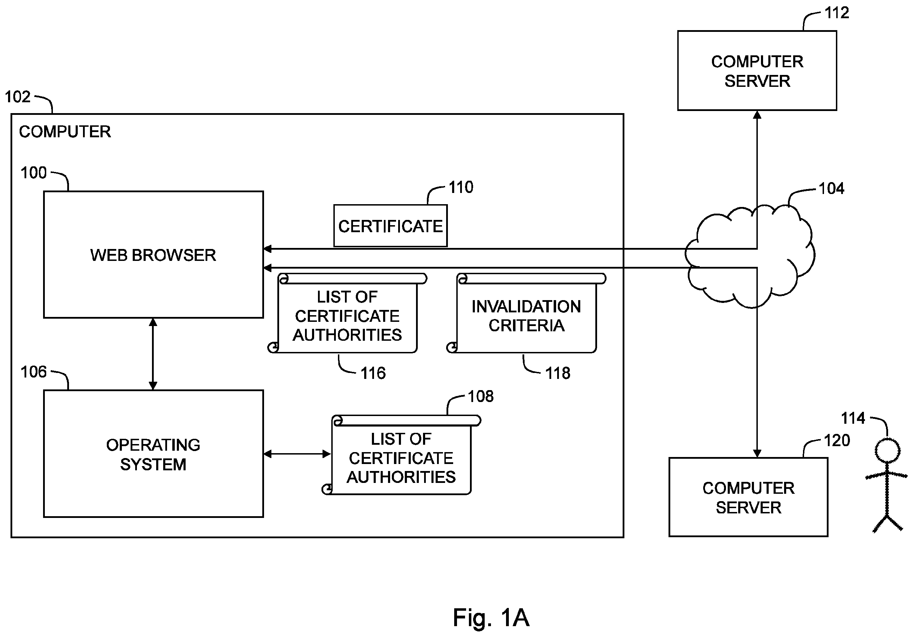

Fig. 1A is a simplified conceptual illustration of a system for defending web browsers against man-in-the-middle attacks, constructed and operative in accordance with an embodiment of the invention;

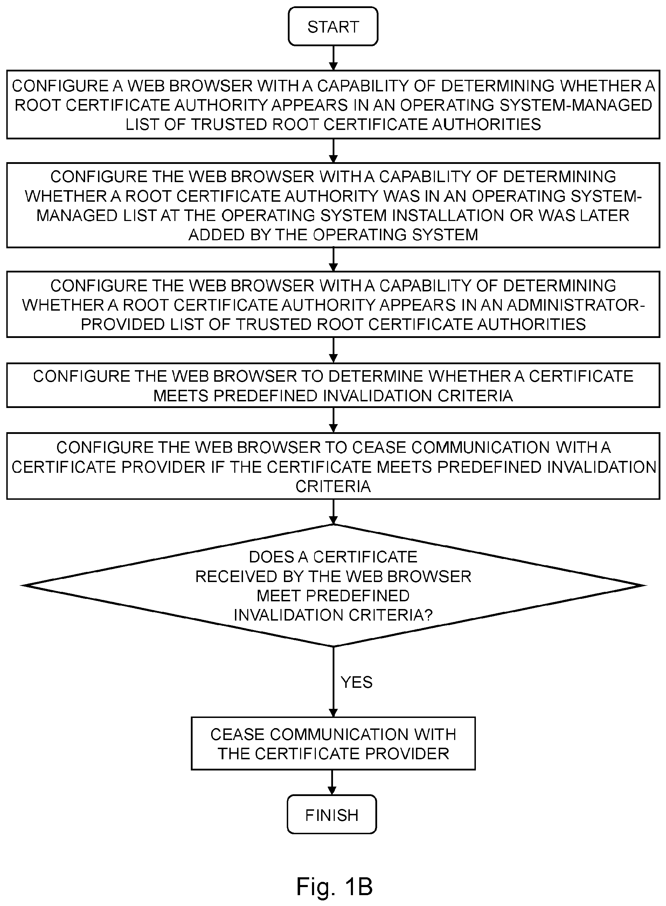

Fig. 1B is a simplified flowchart diagram of an exemplary method for use with the system of Fig. 1A, operative in accordance with an embodiment of the invention, and

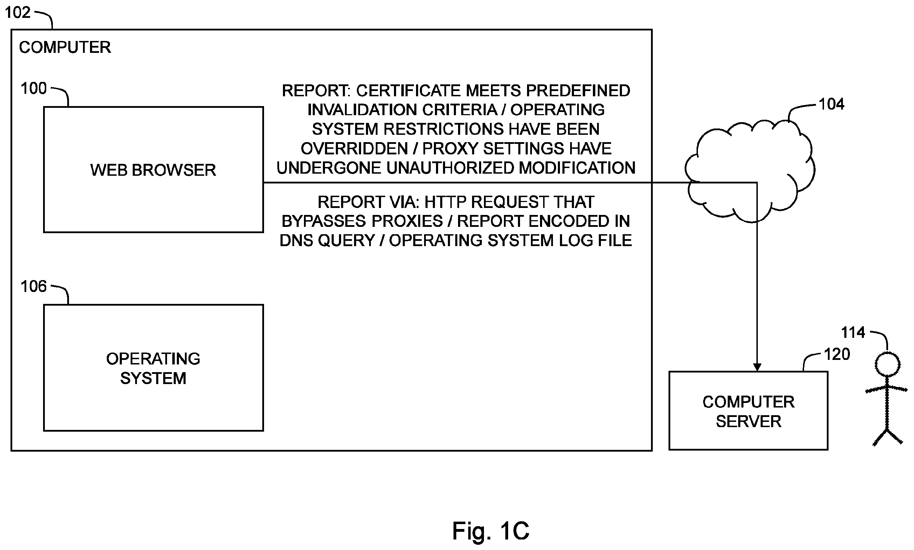

Fig. 1C is a simplified conceptual illustration of a reporting system for use with the system of Fig. 1A, operative in accordance with an embodiment of the invention.

### DETAILED DESCRIPTION

Reference is now made to Fig. 1A, which is a simplified conceptual illustration of a system for defending web browsers against man-in-the-middle attacks, constructed and operative in accordance with an embodiment of the invention, and additionally to Fig. 1B, which is a simplified flowchart diagram of an exemplary method for use with the system of Fig. 1A, operative in accordance with an embodiment of the invention. In the system of Fig. 1A and method of Fig. 1B, a web browser 100 is configured to incorporate the functionality of conventional web browsers, such as those based on the Google^{™} ChromiumTM architecture, and is additionally configured to operate as is described hereinbelow. Web browser 100 may be hosted by any computing device, such as by a host computer 102 that is connected to a computer network 104, such as the Internet. An operating system 106 of host computer 102 is configured to maintain a list 108 of trusted root certificate authorities in accordance with conventional techniques, such as where the root certificate authorities are issuers of certificates that may be validated in accordance with the Transport Layer Security (TLS) protocol.

Operating system 106 is also preferably configured to provide to web browser 100 an indicator indicating whether or not a root certificate authority that is in list 108 was included in list 108 at the time that operating system 106 was installed on host computer 102, or was thereafter included in list 108 by operating system 106. For example, where operating system 106 is Microsoft Windows^{™}, web browser 100 is configured to use the Microsoft Windows^{™} CertGetCertificateContextProperty application programming interface (API) to check the property CERT_AUTH_ROOT_SHA256_HASH_PROP_ID for a given root certificate authority as follows:

```
   bool IsKnownRoot(PCCERT_CONTEXT cert) {
         BYTE hash_prop[32] = {0};
         DWORD size = sizeof(hash_prop);
         return CertGetCertificateContextProperty(
           cert, CERT_AUTH_ROOT_SHA256_HASH_PROP_ID, &hash_prop,
   &size)
         &&
                size == sizeof(hash_prop);
   }
```

where CertGetCertificateContextProperty called with CERT_AUTH_ROOT_SHA256_HASH_PROP_ID having a value of 'true' indicates that the root certificate authority was included in list 108 at the time that operating system 106 was installed on host computer 102, or was thereafter included in list 108 by operating system 106.

Web browser 100 is configured to perform certificate validation in accordance with conventional techniques, such as in accordance with the Transport Layer Security (TLS) or the Secure Sockets Layer (SSL) protocols, in which a certificate 110 that is received by web browser 100 is traced to a root certificate authority, typically along a chain of intermediate certificate authorities, and digital signatures provided by each certificate authority along the chain are authenticated. In one example, certificate 110 is received by web browser 100 from a computer server 112 in response to an attempt by web browser 100 to access a website at computer server 112 via computer network 104.

In accordance with an embodiment of the invention, web browser 100 is further configured to receive from an administrator 114 a list 116 of trusted root certificate authorities and predefined invalidation criteria 118. In one embodiment of the invention, list 116 and predefined invalidation criteria 118 are provided to web browser 100 by administrator 114 where host computer 102 is a "managed device" whose settings are protected in accordance with conventional access-control techniques such that they are configurable only by authorized personnel such as administrator 114. Additionally or alternatively, list 116 and predefined invalidation criteria 118 are provided to web browser 100 by administrator 114 in accordance with techniques described in US Patent Application No. 17/740,457, such as where list 116 and predefined invalidation criteria 118 are received from a computer server 120 in the form of policies that are defined by administrator 114 and that web browser 100 is configured to enforce.

In accordance with an embodiment of the invention, web browser 100 is further configured with a capability of determining whether a root certificate authority appears in list 108, as well as with a capability of determining whether a root certificate authority that appears in list 108 was included in list 108 at the time that operating system 106 was installed on host computer 102 or was thereafter included in list 108 by operating system 106. Web browser 100 is further configured with a capability of determining whether the certificate's root certificate authority appears in list 116 of trusted root certificate authorities that is provided to web browser 110 by administrator 114.

In accordance with an embodiment of the invention, web browser 100 is further configured to determine, either before or after validating a certificate in accordance with conventional techniques, if the certificate meets predefined invalidation criteria 118. In accordance with an embodiment of the invention, predefined invalidation criteria 118 includes that the certificate's root certificate authority was not included in the list (of trusted root certificate authorities that is maintained by the operating system of the host computer) by the operating system or at the time that the operating system was installed on the host computer. The predefined invalidation criteria may further include one or more of the following criteria:
the certificate's root certificate authority does not appear in the list of trusted root certificate authorities that is maintained by the operating system of the host computer;
the certificate's root certificate authority does not appear in the list of trusted root certificate authorities that is provided to the web browser by an administrator.

Web browser 100 is preferably configured to determine whether a certificate meets predefined invalidation criteria 118 after web browser 100 first receives the certificate from a party and before web browser 100 subsequently communicates with the party. Web browser 100 is preferably configured to cease to communicate with the party that provided the certificate if web browser 100 determines that the certificate meets predefined invalidation criteria 118. Thus, if a certificate is provided to web browser 100 by a malicious actor, such as in a man-in-the-middle attack, and web browser 100 determines that the certificate meets predefined invalidation criteria 118 and as a consequence ceases to communicate with the malicious actor, the man-in-the-middle attack may be thwarted.

In accordance with an embodiment of the invention, web browser 100 is further configured to prevent access to keys, such as SSL or TLS public and private encryption keys, that web browser 100 uses to encrypt and decrypt traffic between web browser 100 and certificate-providing endpoints. This may, for example, be implemented by omitting an API from web browser 100 that provides such keys upon request.

In accordance with an embodiment of the invention, web browser 100 is further configured to determine, in accordance with conventional techniques, whether any software restrictions of operating system 106 have been overridden, such as by attaining root access on computing devices that use the Google AndroidTM operating system or by "jailbreaking" computing devices that use the Apple iOSTM operating system. In one variant of this embodiment, web browser 100 is configured to self-terminate in response to determining that any such restrictions have been overridden.

In accordance with an embodiment of the invention, web browser 100 is further configured to determine, in accordance with conventional techniques, whether any proxy settings of host computer 102 or operating system 106 have undergone an unauthorized modification, such as by a party other than administrator 114 or in a manner that is not in accordance with techniques described in US Patent Application No. 17/740,457. In one variant of this embodiment, web browser 100 is configured to self-terminate in response to determining that any such restrictions have been overridden.

Additional reference is now made to Fig. 1C, which is a simplified reporting system for use with the system of Fig. 1A, constructed and operative in accordance with an embodiment of the invention. In the system of Fig. 1C, web browser 100 reports to a recipient, such as to administrator 114 or computer server 120, information related to any of the determinations made by web browser 100 as described above, including:
- determining that predefined invalidation criteria 118 are met regarding a previously validated certificate;
- determining that software restrictions of operating system 106 have been overridden;
- determining that proxy settings of host computer 102 or operating system 106 have undergone unauthorized modification.

In one variant of this embodiment, web browser 100 is configured to report the information by issuing a Hypertext Transport Protocol (HTTP) request to a computer network address with which web browser 100 is configured and in a manner that bypasses any proxy of host computer 102 and operating system 106.

In another variant of this embodiment, web browser 100 is configured to report the information by issuing a Domain Name System (DNS) query to resolve a specified Uniform Resource Locator (URL), where the reported information is encoded in a subdomain portion of the URL, such as using base64 encoding.

In another variant of this embodiment, web browser 100 is configured to report the information using facilities provided by operating system 106, such as Event Tracing for Windows^{™} (ETW) on computing devices that use the Microsoft Windows^{™} operating system, or Syslog^{™} on computing devices that use the Apple MacOS^{™} operating system or the Linux^{™}, where the reported information is stored in a log file.

In another variant of this embodiment, web browser 100 is configured to report the information using an application that is installed on host computer 102 in accordance with techniques described in US Patent Application No. 17/740,457.

Any aspect of the invention described herein may be implemented in computer hardware and/or computer software embodied in a non-transitory, computer-readable medium in accordance with conventional techniques, the computer hardware including one or more computer processors, computer memories, I/O devices, and network interfaces that interoperate in accordance with conventional techniques.

It is to be appreciated that the term "processor" or "device" as used herein is intended to include any processing device, such as, for example, one that includes a CPU (central processing unit) and/or other processing circuitry. It is also to be understood that the term "processor" or "device" may refer to more than one processing device and that various elements associated with a processing device may be shared by other processing devices.

The term "memory" as used herein is intended to include memory associated with a processor or CPU, such as, for example, RAM, ROM, a fixed memory device (e.g., hard drive), a removable memory device (e.g., diskette), flash memory, etc. Such memory may be considered a computer readable storage medium.

In addition, the phrase "input/output devices" or "I/O devices" as used herein is intended to include, for example, one or more input devices (e.g., keyboard, mouse, scanner, etc.) for entering data to the processing unit, and/or one or more output devices (e.g., speaker, display, printer, etc.) for presenting results associated with the processing unit.

Embodiments of the invention may include a system, a method, and/or a computer program product. The computer program product may include a computer readable storage medium (or media) having computer readable program instructions thereon for causing a processor to carry out aspects of the invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the invention.

Aspects of the invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart illustrations and block diagrams in the drawing figures illustrate the architecture, functionality, and operation of possible implementations of systems, methods, and computer program products according to various embodiments of the invention. **In** this regard, each block in the flowchart illustrations or block diagrams may represent a module, segment, or portion of computer instructions, which comprises one or more executable computer instructions for implementing the specified logical function(s). In some alternative implementations, the functions noted in a block may occur out of the order noted in the drawing figures. For example, two blocks shown in succession may, in fact, be executed substantially concurrently, or the blocks may sometimes be executed in the reverse order, depending upon the functionality involved. It will also be noted that each block of the flowchart illustrations and block diagrams, and combinations of such blocks, can be implemented by special-purpose hardware-based and/or software-based systems that perform the specified functions or acts.

The descriptions of the various embodiments of the invention have been presented for purposes of illustration, but are not intended to be exhaustive or limited to the embodiments disclosed. Many modifications and variations will be apparent to those of ordinary skill in the art.

## Claims

1. A computer network security method comprising:
configuring a web browser (100) with a capability of determining whether a root certificate authority appears in a first list of trusted root certificate authorities (108) that is maintained by an operating system (106) of a host computer (102) that hosts the web browser;
configuring the web browser with a capability of determining whether the root certificate authority was included in the first list at the time that the operating system was installed on the host computer or was thereafter included in the first list by the operating system;
configuring the web browser with a capability of determining whether the root certificate authority appears in a second list of trusted root certificate authorities (116) that is provided to the web browser by an administrator (114);
configuring the web browser to determine whether a certificate meets predefined invalidation criteria (118), wherein the predefined invalidation criteria includes the following criteria:
the certificates' root certificate authority was not included in the first list at the time that the operating system was installed on the host computer, or was not included in the first list by the operating system after the operating system was installed on the host computer; and
configuring the web browser to cease to communicate with a party that provided the certificate to the web browser responsive to the web browser determining that the certificate meets the predefined invalidation criteria.

2. The computer network security method according to claim 1 and further comprising configuring the web browser to validate the certificate and thereafter determine whether the certificate meets the predefined invalidation criteria.

3. The computer network security method according to any one of claims 1 or 2, wherein the predefined invalidation criteria further includes one or more of the following criteria:
the certificate's root certificate authority does not appear in the first list; and
the certificate's root certificate authority does not appear in the second list.

## Patentansprüche

1. Verfahren zur Sicherung von Computernetzwerken, umfassend:
Konfigurieren eines Webbrowsers (100) mit der Fähigkeit des Ermittelns, ob eine Stammzertifizierungsstelle in einer ersten Liste vertrauenswürdiger Stammzertifizierungsstellen (108) erscheint, die von einem Betriebssystem (106) eines Host-Computers (102), auf dem der Webbrowser gehostet wird, verwaltet wird;
Konfigurieren des Webbrowsers mit der Fähigkeit des Ermittelns, ob die Stammzertifizierungsstelle zum Zeitpunkt der Installation des Betriebssystems auf dem Host-Computer in der ersten Liste eingeschlossen war oder anschließend vom Betriebssystem in die erste Liste eingeschlossen wurde;
Konfigurieren des Webbrowsers mit der Fähigkeit des Ermittelns, ob die Stammzertifizierungsstelle in einer zweiten Liste vertrauenswürdiger Stammzertifizierungsstellen (116) erscheint, die dem Webbrowser von einem Administrator (114) zur Verfügung gestellt wird;
Konfigurieren des Webbrowsers zum Ermitteln, ob ein Zertifikat vordefinierte Ungültigkeitskriterien (118) erfüllt, wobei die vordefinierten Ungültigkeitskriterien die folgenden Kriterien einschließen:
die Stammzertifizierungsstelle des Zertifikats war zum Zeitpunkt der Installation des Betriebssystems auf dem Host-Computer nicht in der ersten Liste eingeschlossen oder wurde vom Betriebssystem nach der Installation auf dem Host-Computer nicht in die erste Liste eingeschlossen; und
Konfigurieren des Webbrowsers, um die Kommunikation mit dem Zertifikatsinhaber einzustellen, sobald der Webbrowser ermittelt, dass das Zertifikat die vordefinierten Ungültigkeitskriterien erfüllt.

2. Verfahren zur Sicherung von Computernetzwerken nach Anspruch 1, das weiter das Konfigurieren des Webbrowsers zur Validierung des Zertifikats und das anschließende Ermitteln, ob das Zertifikat die vordefinierten Ungültigkeitskriterien erfüllt, umfasst.

3. Verfahren zur Sicherung von Computernetzwerken nach einem der Ansprüche 1 oder 2, wobei die vordefinierten Ungültigkeitskriterien weiter eines oder mehrere der folgenden Kriterien einschließen:
die Stammzertifizierungsstelle des Zertifikats erscheint nicht in der ersten Liste; und
die Stammzertifizierungsstelle des Zertifikats erscheint nicht in der zweiten Liste.

## Revendications

1. Procédé de sécurité de réseau informatique comprenant :
la configuration d'un navigateur Web (100) avec une capacité à déterminer si une autorité de certification racine apparaît dans une première liste d'autorités de certification racine de confiance (108) qui est maintenue par un système d'exploitation (106) d'un ordinateur hôte (102) qui héberge le navigateur Web ;
la configuration du navigateur Web avec une capacité à déterminer si l'autorité de certification racine était incluse dans la première liste au moment de l'installation du système d'exploitation sur l'ordinateur hôte ou si elle a été incluse par la suite dans la première liste par le système d'exploitation ;
la configuration du navigateur Web avec une capacité à déterminer si l'autorité de certification racine apparaît dans une seconde liste d'autorités de certification racine de confiance (116) qui est fournie au navigateur Web par un administrateur (114) ;
la configuration du navigateur Web pour déterminer si un certificat répond à des critères d'invalidation prédéfinis (118), dans lequel les critères d'invalidation prédéfinis incluent les critères suivants :
l'autorité de certification racine des certificats n'était pas incluse dans la première liste au moment de l'installation du système d'exploitation sur l'ordinateur hôte, ou n'était pas incluse dans la première liste par le système d'exploitation après l'installation du système d'exploitation sur l'ordinateur hôte ; et
la configuration du navigateur Web pour qu'il cesse de communiquer avec une partie qui a fourni le certificat au navigateur Web lorsque le navigateur Web détermine que le certificat répond aux critères d'invalidation prédéfinis.

2. Procédé de sécurité de réseau informatique selon la revendication 1 et comprenant en outre la configuration du navigateur Web pour valider le certificat et déterminer par la suite si le certificat répond aux critères d'invalidation prédéfinis.

3. Procédé de sécurité de réseau informatique selon l'une quelconque des revendications 1 ou 2, dans lequel les critères d'invalidation prédéfinis incluent en outre un ou plusieurs des critères suivants :
l'autorité de certification racine du certificat n'apparaît pas dans la première liste ; et
l'autorité de certification racine du certificat n'apparaît pas dans la seconde liste.
